# EUROPÄISCHE PATENTSCHRIFT

(11) **EP 0 671 232 B1**
(45) Veröffentlichungstag und Bekanntmachung des Hinweises auf die Patenterteilung: **09.02.2000**
(21) Anmeldenummer: 95200504.9
(22) Anmeldetag: 02.03.1995
(51) Int. Cl.: B22F 3/105, B22F 3/14

(54) **Verfahren zur Herstellung von Pulverpresslingen hoher Dichte**
Process for preparing high density powder compacts
Procédé de préparation de comprimés à densité élevée

(30) Priorität: 08.03.1994 DE 4407593
(43) Veröffentlichungstag der Anmeldung: 13.09.1995
(73) Patentinhaber: SINTERSTAHL Gesellschaft m.b.H., D-87629 Füssen (DE)
(72) Erfinder:
(74) Vertreter: Lohnert, Wolfgang, Dr.

(56) Entgegenhaltungen:
- DE-A- 1 936 592
- DE-B- 1 280 514
- FR-A- 947 554
- US-A- 3 656 946

## Beschreibung

Die Erfindung betrifft ein Verfahren zum Pressen von elektrisch leitfähigen Pulvern oder vorgepreßten Pulvern zu sinterfähigen Formteilen hoher Preßdichte in einer Preßform, die eine Matrize aus im seitlichen Wandbereich elektrisch nicht leitenden Material und die einen oder mehrere Ober- und/oder Unterstempel aus leitendem Material aufweist und auf die während des Preßvorganges elektrische Stromimpulse gegeben werden.

Die Entwicklung pulvermetallurgischer und keramischer Bauteile und die Erweiterung der Einsatzbereiche derartig gefertigter Bauteile hängt eng mit dem Erreichen höherer Preßdichten zusammen. Die Folge sind höhere Dichten und höhere mechanische Festigkeiten für die daraus gefertigten Sinterteile. Aus diesem Grunde werden heute die Preßdrücke beim statischen Verdichten von Pulvern bis an die Grenzen der Werkzeugstähle und sonstigen verwendeten Werkzeugmaterialien gelegt. Es ist aber bekannt, daß sich durch statisches Verdichten nicht annähernd porenfrei dichte Preßlinge erreichen lassen. So liegt die maximal erreichbare Preßdichte von Eisen- und Stahlpulver bei ca. 90 % der theoretischen Dichte, weil sich während des Preßvorganges die Pulverteilchen im geschlossenen Werkzeug zunehmend gegeneinander abstützen, damit die zur Weiterverdichtung notwendigen Preßdrücke asymptotisch steigen und somit die praktischen Verdichtungsgrenzen rasch erreichen lassen.

Mögliche Verfahren zur weiteren Dichtesteigerung von verpreßten Pulvern sind z. B. das Heißpressen, wo über das plastische Fließen des Pulvers eine hohe Verdichtung und Versinterung erreicht wird. In der EP 0 375 469 ist beispielsweise ein derartiges Verfahren unter dem Titel "Verfahren zur Elektroverdichtung eines in Partikelform vorliegenden, vorgeformten Werkstückes" beschrieben. Dort werden Werkstücke im Preßwerkzeug vorverdichtet und anschließend über die Zuführung eines elektrischen Gleichstromes direkt an die entsprechend isolierten Preßstempel weiterverdichtet und versintert.

Andere Verfahren lassen sich unter dem Begriff "dynamische Verdichtung" zusammenfassen. Bei diesen Verfahren werden die Preßkräfte punkt- oder linienförmig und zeitlich anschwellend aufgebracht. Derartige Verfahren verursachen vor allen in Preßlingen komplexerer Form Materialinhomogenitäten und in nicht vernachlässigbarem Umfang Rißbildung.

Eine besondere Gruppe von Verfahren zur Pulververdichtung lassen sich unter den Begriffen Ultraschall- und Explosionsverfahren zusammenfassen. Die Ultraschall-Verfahren ermöglichen lediglich im Anfangsstadium der Pulververdichtung eine dichtere Packungslage einzelner Pulverkörner. Wirklich dichte Preßlinge lassen sich in der Praxis nicht herstellen. Eine Kombination von Verdichten mittels Schallwellen und Sintern ist in der DE-OS 31 38 223 beschrieben.
Die Explosions-Verfahren lassen sich in der Praxis schwer handhaben. Nach derartigen Verfahren lassen sich nur kompakte Bauteilformen aus Pulver erzeugen. Häufiger werden vergleichsweise dünne Pulverschichten in Anwendung des Explosionsverfahrens auf kompakte Formkörper aufgepreßt. Derartige Verfahren eignen sich nicht zur Anwendung bei Massenteilen, wenngleich durch das Explosionsverdichten Pulverpreßlinge bis zu nahezu theoretischer Dichte erreicht werden. Ein solches Verfahren wird beispielsweise in der DE-OS 27 38 674 beschrieben.

In Weiterentwicklung des oben erwähnten Heißpreß-Verfahrens werden heute elektrisch leitfähige Pulverwerkstoffe zunächst statisch vorverpreßt und dann mittels elektrischer Stromimpulse in der Preßform weiterverdichtet und gleichzeitig versintert. Je nach den praktisch angewendeten Impulsbedingungen sind sehr unterschiedliche Ausführungen des Verfahrens möglich. Eine Variante stellt einen Direktsintervorgang mit pulsweisem Stromdurchgang durch das zu fertigende Teil über lange Zeiträume dar. Die DE-OS 27 55 855 beschreibt ein solches Verfahren, wobei im Preßgut starke elektrische Stromstöße induktiv erzeugt werden.
Bei der unter dem Namen Plasmasintern bekannt gewordenen Verfahrensvariante werden solche Impulszustände geschaffen, daß bei den vorgepreßten Pulvern mit verbliebenen räumlichen Abständen zwischen den einzelnen Pulverkörnern ein elektrisches Entladungsplasma, d.h. bei hohen Temperaturen ionisierte Teilchen erzeugt werden. Diese führen zu einem örtlichen Aufschmelzen der Pulverteilchen, zum plastischen Fließen und damit zum dichten Versintern. Als wichtige Nebenaufgaben werden bei diesem Verfahren Oxidhäutchen und Oberflächen-Verunreinigungen der Pulverkörner aufgebrochen und damit das Zusammensintern ansonsten schwer versinterbarer Pulverkörner ermöglicht. Eine nähere Beschreibung dieses Verfahrens erfolgte z. B. in dem wissenschaftlichen Aufsatz von M. Ishiyama unter dem Titel "Plasma activated sintering (PAS) system", erschienen in den Proceedings of 1993, Powder Metallurgy World Congress in Osaka, Japan.
Ein vergleichbares Verfahren wird beispielsweise in der EP 0 451 969 unter dem Titel "Sinterverbund und Verfahren zu seiner Herstellung" beschrieben.
Es handelt sich bei all diesen Verfahren um ein Hochtemperatursintern von Formteilen in der Preßform. Das Sinterverfahren wird gegenüber herkömmlichen Sinterverfahren von vorgepreßten Formteilen zwar wesentlich verkürzt.
Gleichwohl müssen die zu fertigenden Sinterkörper bei üblichen Sintertemperaturen für ca. 5 bis 10 Minuten in der aus Preßform und Impulsgenerator bestehenden Gesamteinrichtung verbleiben, sodaß sich diese Verfahren nicht zur Herstellung kostengünstiger Sinter-Massenteile eignen.

Das in der EP 0 451 969 angewendete Verfahren ist in deren Figur 3 skizziert und in der Anmeldebeschreibung in Spalte 3 näher beschrieben.
Ein Preßwerkzeug besteht aus einer Preßmatrize mit elektrisch isolierender Schicht auf der Innenseite. Die Matrize bildet die Seitenwand des Preßwerkzeuges. Das in die Matrize eingefüllte Pulver wird durch den axialen Hub eines unteren und eines oberen metallischen Preßstempels unter üblichen Bedingungen verpreßt. Der obere und untere Preßstempel sind mit dem Kondensator einer Impulsentladungs-Einrichtung verbunden. Durch Schließen eines Kurzschluß-Schalters wird eine hohe Spannung zwischen Ober- und Unterstempel angelegt, die eine elektrische Entladung zwischen den Stempeln durch das Preßgut hindurch ermöglicht. Die Entladung wird für einen Verdichtungs- und gleichzeitigen Sintervorgang vielfach wiederholt. Durch die bei der wiederholten Entladung erzeugte Wärme wird das Preßgut angeschmolzen und zusammengesintert.

Aufgabe vorliegender Erfindung ist die Bereitstellung eines Verfahrens, nach dem Preßlinge für Massenteile aus elektrisch leitenden Pulver-Werkstoffen mit hoher, nahezu theoretischer Preßdichte in hoher Taktfrequenz hergestellt werden können. Die Taktzeiten sollen denjenigen beim üblichen Pulverpressen von Formteilen in statischen, z. B. hydraulischen Pressen vergleichbar sein. Derartig gepreßte Formkörper sollen anschließend nach üblichen Verfahren zu Sinterkörpern weiterverarbeitbar sein. Das Verfahren soll insbesondere auch auf die Herstellung von Formteilen aus elektrisch schlecht leitendem Basiswerkstoff oder auch aus Werkstoffverbunden mit nicht leitenden Werkstoffanteilen anwendbar sein.

Die Aufgabe wird durch ein Verfahren gelöst, wie es in Anspruch 1 beschrieben ist.

Der wesentliche Vorteil des erfinderischen Verfahrens besteht somit im Verpressen von Pulvern zu Preßlingen hoher, in der Regel nahezu theoretischer Dichte. Derartige Dichten werden durch statisches Verpressen von Pulvern allein in keinem Fall erreicht. So werden für Pulver aus Eisenwerkstoffen nach üblichen Verfahren im Preßling ca. 90 % der theoretischen Dichte erreicht, nach dem erfinderischen Verfahren aber bis zu > 99 % theoretischer Dichte.
Die zu verpressenden Pulver müssen elektrische Leitfähigkeit besitzen. Desweiteren muß durch ausreichendes statisches Vorverdichten der Pulver und durch gute Kontakte zwischen Stempel und Preßgut eine Obergrenze für den Ohmschen Widerstand von Preßgut und Preßwerkzeug unterschritten sein.

Selbstverständlich lassen sich diese Mindestanforderungen an die elektrische Leitfähigkeit auch aktiv nutzen. So können für Bereiche unterschiedlicher Leitfähigkeit im Preßling gezielt unterschiedliche Enddichten in einzelnen Bereichen des Pulverpreßlings herbeigeführt werden.

Ein ganz wesentlicher Vorteil des erfinderischen Verfahrens liegt darin, daß mit Rissen und sonstigen geometrischen Unregelmäßigkeiten behaftete, durch Pressen auf 10 bis 15 % Restporosität vorverdichtete Pulver mittels dem erfinderischen Verfahren zu weitgehend homogenen, rißfreien Preßlingen höchster Dichte weiterverarbeitet werden.

Für das erzielte Ergebnis ist wesentlich, daß sich die Verdichtung aufgrund eines einzigen, bzw. nur einiger weniger Stromimpulse erzielen läßt, sodaß sich dieses Verfahren vorzüglich zur Herstellung von Massenteilen eignet, wobei Taktzeiten für das Pressen erreichbar sind, die mit den hohen Taktzeiten für das übliche statische Verpressen von Pulvern in Preßformen vergleichbar sind.
Dieses Ergebnis war insofern überraschend, als in grundsätzlich vergleichbaren Anlagen bereits nach dem sogenannten Plasma-Sinterverfahren gearbeitet wird, bei dem mittels einer Vielzahl von elektrischen Entladungen über das Versintern gleichzeitig ein entsprechendes Verdichten der zu Preßlingen kompaktierten Pulver erreicht wird. Im Unterschied zum vorliegenden erfinderischen Verfahren werden dort hohe Sintertemperaturen sowie im Vergleich zum erfinderischen Verfahren lange Verweil- bzw. Sinterzeiten für das Preßgut im Preßwerkzeug benötigt.
Demgegenüber haben metallographische Untersuchungen an erfindungsgemäß dicht gepreßten Formteilen keine nennenswerten Versinterungen der Pulverkörner im Preßgut gezeigt. Ebenso tritt während des Verdichtens, ausgelöst durch Stromimpuls und bei ausreichend hoher Leitfähigkeit des Preßgutes nach dem erfindungsgemäßen Verfahren keine nennenswerte Erwärmung des Preßgutes auf.

Es ist bekannt, daß die elektrische Leitfähigkeit verpreßter Pulver nicht nur von der Höhe der elektrischen Leitfähigkeit des Werkstoffes selbst und nicht nur vom Kompaktierungsgrad, sondern auch von den an der Pulveroberfläche haftenden Oxidschichten und/oder sonstigen festen und gasförmigen Verunreinigungen abhängt. Aus diesem Grund hat es sich mitunter als vorteilhaft erwiesen, das Verdichten mittels zwei oder drei aufeinanderfolgender elektrischer Impulsentladungen vorzunehmen. Dabei wird vorteilhafterweise ein erster Stromimpuls vergleichsweise kleiner Scheitelstromhöhe und großer Impulsdauer auf das Preßgut aufgebracht, gefolgt von einem zweiten und eventuell dritten Stromimpuls vergleichsweise großer Scheitelstromhöhe und kleiner Impulsdauer.

Das erfinderische Verfahren hat sich für eine große Vielfalt unterschiedlich geformter Preßlinge bewährt. Preßlinge vergleichsweise großer Preßfläche und kleiner Preßlingshöhe ließen sich ebenso verdichten wie Preßlinge kleinen Preßquerschnitts und großer Preßlingshöhe. Selbstverständlich sind die Bedingungen für die aufzubringenden Stromimpulse innerhalb der genannten Bereiche für elektrische Spannung, Scheitelstromhöhe, Ladungsmenge und Impulsdauer auf die jeweiligen Preßform- und Preßgut-Verhältnisse anzupassen.

Das Verfahren läßt sich auf sehr unterschiedliche Metalllegierungen und sonstige elektrisch leitfähige Materialien anwenden. Es lassen sich sowohl magnetische als auch nicht magnetische Werkstoffe verarbeiten. Neben verschiedenartigen Eisen- und Stahlwerkstoffen ließen sich z. B. auch Kupfer, Bronze und Chrom verdichten.
Graphit als die elektrische Leitfähigkeit erhöhender Zusatzwerkstoff hat sich besonders gut bewährt, wie z. B. auch Kupfer oder Aluminium.

Zur Durchführung des erfinderischen Verfahrens werden keine besonderen, über das übliche Maß hinausgehende Anforderungen an die zu verarbeitenden Pulver hinsichtlich Teilchenform, Teilchengröße oder oberflächlich anhaftender Verunreinigungen gestellt.

Es hat sich in der Praxis gezeigt, daß sich je nach dem für die Preßstempel verwendeten Material sehr unterschiedliche Impulscharakteristiken und verbleibende Restporositäten für das Preßgut ergeben haben. Es haben sich sowohl einige Stahlsorten, als auch Hartmetall und schließlich metallische Sonderwerkstoffe auf Molybdänbasis als Stempelmaterial gut bewährt. Es wurden als Stempelmaterial sowohl ferromagnetische als auch andere Werkstoffe eingesetzt, wobei im Falle von ferromagnetischen Werkstoffen ein hoher Ohmscher Gesamtwiderstand des gefüllten Preßwerkzeuges das erfinderische Verfahren nachteilig beeinflussen dürfte.

Die Werkzeugmatrize wird vorzugsweise aus elektrisch nicht leitendem, nicht magnetischen Material gefertigt. Es ist aber auch die Verwendung elektrisch leitender Matrizen denkbar, vorausgesetzt, diese besitzen eine elektrisch nicht leitende Oberflächenschicht an der den Preßstempel und das Preßgut angrenzenden Innenwand.

Als Grundausstattung zur Anwendung des erfinderischen Verfahrens haben sich statische Pressen mit mechanischem und hydraulischem Antrieb gleichermaßen bewährt, wie sie üblicherweise in der Serienfertigung zur Herstellung von Formteilen in Preßformen verwendet werden.

Wesentliche Bedeutung kommt dem Anbringen eines Federelementes, z. B. ein mechanisches Federelement, zwischen dem Preßstempel und dem übrigen Pressenantrieb zu. Für diesen Zweck hat sich insbesondere das Anbringen eines Kunststoffblockes unmittelbar auf dem Preßstempel bewährt.
Der Kunststoffblock wird während des statischen Preßvorganges komprimiert und damit vorgespannt und erlaubt bei entsprechenden Lage- und Formänderungen der Pulverteilchen im Preßgut während des elektrischen Stromimpulses ein verzögerungsarmes Nachführen des Preßstempels in Hubrichtung und damit ein sprunghaftes Wiederherstellen des ursprünglichen statischen Preßdruckes auf das Preßgut während des Verdichtungsvorganges.

Als Vorrichtung zur Erzeugung der Hochstromimpulse haben sich leistungsstarke Impulsgeneratoren bewährt.

Weitere Ausgestaltungen des erfinderischen Verfahrens sind in den Unteransprüchen genannt; ebenso besonders vorteilhafte Vorrichtungen zur Durchführung des erfinderischen Verfahrens.

Die nach dem erfinderischen Verfahren hergestellten Formteile hoher Preßdichte lassen sich anschließend in getrennten Sinteranlagen üblicher Bauart zu Sinterformteilen hoher Festigkeit und Dichte weiterverarbeiten.

Das erfinderische Verfahren wird anhand nachfolgender Beispiele näher beschrieben.

### BEISPIEL 1:

Ausganswerkstoff ist Eisenpulver (Korngröße < 150 µm) der Handelsbezeichnung WP 200, Lieferant Firma Mannesmann AG. Als Preßwerkzeug dient eine übliche hydraulische Presse. Die elektrischen Stromimpulse werden von einem leistungsstarken Generator erzeugt. Die Preßstempel sind aus Molybdän-Legierungen gefertigt. Als Matrizenmaterial dient ein hochfestes Keramikmaterial. Der zylinderförmige Pulverpreßling besitzt einen Durchmesser von 10 mm und nach dem Verdichten eine Höhe von ebenfalls ca. 10 mm. Das Eisenpulver wird zunächst mit einem Stempeldruck von 5,0 t/cm² vorgepreßt. Anschließend wird ein einziger Stromimpuls von 2,25 ms Impulsdauer von 86 kA Scheitelstromhöhe und damit von ca. 194 As auf Preßgut und Preßstempel aufgebracht. Die elektrische Spannung an den Preßstempeln während des Stromimpulses liegt bei ca. 10 V. Die abschließende erreichte Preßdichte des Formteiles beträgt 99,2 % der theoretischen Dichte.
Eine mikroskopische Untersuchung der so erzeugten Probe zeigt weder an der Oberfläche noch im Inneren nennenswerte Inhomogenitäten, insbesondere keine Risse. Die mikroskopischen Untersuchungen ergeben keine Anzeichen für eine nennenswerte Versinterung einzelner kompaktierter Pulverteilchen.
Die Festigkeit derart verdichteter Formteile ist gering. Sie entspricht in erster Näherung der nach üblichen Verfahren hergestellter Preßlinge.

Die so gefertigten Preßlinge werden anschließend nach üblichen Verfahren und unter üblichen Bedingungen in einem Sinterdurchlaufofen zu hochfesten, maßstabilen Sinterteilen mit minimaler Restporosität fertig bearbeitet.

### BEISPIEL 2:

Wie in Beispiel 1 wird das handelsübliche Eisenpulver WP 200 verpreßt. Die Presse, Preßwerkzeug und Vorrichtungen zur Erzeugung der elektrischen Impulse entsprechen ebenfalls denjenigen nach Beispiel 1.
Das Pulver wird statisch bis zu einem Enddruck von 4,3 t/cm² vorgepreßt. Dann wird ein erster Stromimpuls mit nachfolgenden Parametern auf die Preßform gegeben:
- Spannung zwischen den Preßstempeln 12 V
- Scheitelstromhöhe 67 kA
- elektrische Ladung 147 As
- Entladungszeit ca. 2,2 x 10⁻³ s
Verschiedene Beobachtungen und Messungen des so erhaltenen Preßlings, wie z. B. dessen Ohmscher Widerstand, sind Anzeichen für eine nicht befriedigende Verdichtung des Preßgutes.
Daher wird bei gleichem Preßdruck ein zweiter elektrischer Stromimpuls folgender Bedingungen aufgebracht:
- Scheitelstromhöhe 100 kA
- elektrische Ladung 500 As
- Impulsdauer 5 x 10⁻³ s
Der so gefertigte Preßling weist annähernd 100 % theoretische Dichte auf. Der Preßling weist keine bzw. nur unbedeutende Versinterung zwischen einzelnen Pulverteilchen auf und wird daher unter üblichen Sinterbedingungen zum fertigen Formteil in "near-net-shape" Qualität versintert.

### BEISPIEL 3:

Verwendetes Ausgangsmaterial und Vorrichtungen entsprechen dem Beispiel 1. Dem Eisenpulver wird jedoch 2 Gew.% Cu-Pulver der Korngröße < 63 µm beigemischt.
Abweichend von den vorherigen Beispielen wird zunächst nach üblichen Bedingungen ohne Anwendung der elektrischen Stromimpulse ein Preßling von ca. 90 % theoretischer Dichte erzeugt und in üblichen Sintereinrichtungen soweit vorgesintert, daß Sinterbrücken zwischen einzelnen Pulverteilchen erkennbar werden. Aufgrund der bewußt gewählten geometrischen Form und Preßbedingungen zeigt das vorgesinterte Teil einzelne Kerben und Haarrisse im Werkstoff. In den vorgesinterten Preßling werden daraufhin zusätzlich einzelne, verschieden tiefe Oberflächenkerben im Formteil angebracht. Das so vorbehandelte Formteil wird wiederum in das Preßwerkzeug bzw. die Preßvorrichtung eingelegt, mit einem statischen Druck von 5,0 t/cm² beaufschlagt und dann entsprechend der Erfindung einem elektrischen Stromimpuls wie folgt ausgesetzt:
- Spannung an den Preßstempeln 12 V
- Scheitelstromhöhe 130 kA
- elektrische Ladung 307 As
- Impulsdauer ca. 2,2 x 10⁻³ s
Das so behandelte Formteil weist anschließend 99 % der theoretischen Dichte auf. Die inneren Haarrisse und äußeren Kerben am Formteil sind vollständig ausgeheilt bzw. im Mikroskop nicht mehr nachweisbar. Der Preßling wird anschließend nach üblichen Bedingungen zu einem hochfesten Sinterformteil weiterverarbeitet.

### BEISPIEL 4:

Es wird im Handel erhältliches Carbonyleisen (CS) der Firma BASF AG verarbeitet. Die mittlere Korngröße liegt bei 4 bis 5 µm. Zur Durchführung des Verfahrens werden die Vorrichtungen entsprechend Beispiel 1 verwendet.
Das Pulver wird mit einem Druck von 4,3 t/cm² auf ca. 75 % der theoretischen Dichte verpreßt und anschließend mit zwei, zum Zweck einer Probenuntersuchung unterbrochenen elektrischen Stromimpulsen beaufschlagt. Die an der Preßform anliegende Spannung beträgt in beiden Fällen ca. 12 V. Für den ersten Stromimpuls gelten folgende Parameter:
- Scheitelstromhöhe 7 kA
- elektrische Ladung 13 As
- Impulsdauer 2 x 10⁻³ s
Danach weist der Preßling kaum verbesserte Dichte von 76 % der theoretischen Dichte auf.
Beim zweiten elektrischen Stromimpuls, unter gleicher Druckbeaufschlagung wie oben, kommen folgende Parameter zur Anwendung:
- Scheitelstromhöhe 70 kA
- elektrische Ladung 490 As
- Stromimpulsdauer 7 ms
Das verpreßte Formteile zeigt praktisch 100 % theoretische Dichte und läßt sich in üblichen Einrichtungen unter üblichen Sinterbedingungen zu einem hochfesten Sinterformteil weiterverarbeiten.

Die vorgenannten Beispiele stellen nur eine stellvertretende Auswahl der möglichen Ausgestaltungen des erfinderischen Verfahrens der verwendbaren Vorrichtungen und insbesondere der verarbeitungsfähigen Werkstoffe dar.

## Patentansprüche

1. Verfahren zum Pressen von elektrisch leitfähigen Pulvern oder vorgepreßten Pulvern zu sinterfähigen Formteilen hoher Preßdichte in einer Preßform, die eine Matrize aus im seitlichen Wandbereich elektrisch nicht leitenden Material und die einen oder mehrere Ober- und/oder Unterstempel aus leitendem Material aufweist und auf die während des Preßvorganges elektrische Stromimpulse gegeben werden,
**dadurch gekennzeichnet,**
daß auf die pulvergefüllte Preßform zunächst ein axialer Preßdruck aufgebracht wird, der ≤ den für das statische Pressen entsprechender Werkstoffe üblichen Drücken ist, daß unter Beibehaltung der Druckbeaufschlagung mittels 1 bis 3 Stromimpulsen von 5 x 10⁻⁵ bis 10⁻² s Dauer sowie mit einer elektrischen Ladung, bezogen auf 1 cm³ Preßgut, von > 20 As und bei einer elektrischen Spannung < 30 V zwischen Ober- und Unterstempel eine sprunghafte Volumensschrumpfung und Pulververdichtung im Preßgut auf Werte > 96 % theoretischer Dichte erzielt wird
und daß im Preßgut sprunghaft ausgelöste Volumensschrumpfungen mittels Vorrichtungen zum verzögerungsarmen Nachführen des/der Preßstempel(s) in Hubrichtung unterstützt werden.

2. Verfahren zum Pressen von Pulvern zu Formteilen nach Anspruch 1, dadurch gekennzeichnet, daß ein Preßdruck von 3 bis 7 t/cm² aufgebracht wird.

3. Verfahren zum Pressen von Pulvern zu Formteilen nach Anspruch 2, dadurch gekennzeichnet, daß Stromimpulse einer elektrischen Ladung von 100 bis 400 As über die Preßform gegeben werden.

4. Verfahren zum Pressen von Pulvern zu Formteilen nach Anspruch 1 oder 3, dadurch gekennzeichnet, daß Stromimpulse einer Scheitelstromstärke zwischen 10 und 200 kA bezogen auf 1 cm² Preßfläche aufgebracht werden.

5. Verfahren zum Pressen von Pulvern zu Formteilen nach Anspruch 1 bis 4, dadurch gekennzeichnet, daß Preßstempel aus einem nicht oder schwach magnetischen Werkstoff hoher Festigkeit und guter elektrischer Leitfähigkeit verwendet werden.

6. Verfahren zum Pressen von Pulvern zu Formteilen nach Anspruch 1 bis 5, dadurch gekennzeichnet, daß metallische Pulver verpreßt werden.

7. Verfahren zum Pressen von Pulvern zu Formteilen nach Anspruch 1 bis 6, dadurch gekennzeichnet, daß metallisierte Pulver verpreßt werden.

8. Verfahren zum Pressen von Pulvern zu Formteilen nach Anspruch 1 bis 7, dadurch gekennzeichnet, daß Pulvermischungen mit elektrisch leitenden WerkstoffAnteilen verpreßt werden.

9. Verfahren zum Pressen von Pulvern zu Formteilen nach Anspruch 1 bis 8, dadurch gekennzeichnet, daß Kupfer, Aluminium und/oder Graphit als gut elektrisch leitfähige Werkstoffe der Pulvermischung beigegeben werden.

10. Verfahren zum Pressen von Pulvern zu Formteilen nach Anspruch 1 bis 9, dadurch gekennzeichnet, daß im Anschluß an einen ersten Stromimpuls vergleichsweise kleiner Scheitelstromhöhe und großer Impulsdauer ein zweiter Stromimpuls großer Scheitelstromhöhe und kleiner Impulsdauer aufgebracht wird.

11. Vorrichtung zur Durchführung des Verfahrens nach Anspruch 1 bis 10, dadurch gekennzeichnet, daß diese eine mechanische Presse umfaßt und daß das verzögerungsarme Nachführen des Preßstempels in Hubrichtung mittels eines durch den Preßdruck vorgespannten Kunststoffblocks erfolgt, der zwischen Preßstempel und mechanischem Pressenantrieb angeordnet ist.

## Claims

1. A process for compressing electrically conductive powders or pre-compressed powders to form sinterable mouldings of high compression density in a compression mould which comprises a die, composed of electrically non-conductive material in the lateral wall region, and one or more upper and/or lower rams composed of conductive material, and to which current pulses are applied during the compression process, characterised in that firstly an axial pressure, which is ≤ the pressures conventionally employed for the static compression of corresponding materials, is applied to the powder filled compression mould, that while maintaining the pressure application, by means of 1 to 3 current pulses of 5 x 10⁻⁵ to 10⁻² s duration, and with an electric charge of > 20 As relative to 1 cm³ compressed material, and with an electric voltage < 30 V between upper and lower rams, a sudden volume shrinkage and powder compression in the compressed material to values > 96% theoretical density are obtained, and that volume shrinkages suddenly triggered in the compressed material are sustained by devices for adjusting the pressure ram(s) in the stroke direction with little delay.

2. A process for compressing powders to form mouldings according to Claim 1, characterised in that a compression pressure of 3 to 7 t/cm² is applied.

3. A process for compressing powders to form mouldings according to Claim 2, characterised in that current pulses with an electric charge of 100 to 400 As are transmitted across the mould.

4. A process for compressing powders to form mouldings according to Claim 1 or 3, characterised in that current pulses with a peak current strength of between 10 and 200 kA relative to 1 cm² compressed surface are applied.

5. A process for compressing powders to form mouldings according to Claim 1 to 4, characterised in that pressure rams composed of a high-strength, nonmagnetic or weakly magnetic material with good electric conductivity are used.

6. A process for compressing powders to form mouldings according to Claim 1 to 5, characterised in that metallic powders are compressed.

7. A process for compressing powders to form moulding according to Claim 1 to 6, characterised in that metallized powders are compressed.

8. A process for compressing powders to form mouldings according to Claim 1 to 7, characterised in that powder mixtures with electrically conductive material constituents are compressed.

9. A process for compressing powders to form mouldings according to Claim 1 to 8, characterised in that copper, aluminium and/or graphite are added to the powder mixture as highly electrically conductive materials.

10. A process for compressing powders to form mouldings according to Claim 1 to 9, characterised in that following a first current pulse of comparatively low peak current strength and long pulse duration, a second current pulse of high peak current strength and short pulse duration is applied.

11. A device for the implementation of the process according to Claim 1 to 10, characterised in that said device comprises a mechanical press and that the adjustment of the pressure ram in the stroke direction with little delay is effected by means of a synthetic resin block which is prestressed by the compression pressure and which is arranged between pressure ram and mechanical press drive means.

## Revendications

1. Procédé de compactage de poudres hautement conductrices ou de poudres précomprimées pour former des ébauches aptes à être frittées à densité élevée après compression dans un ensemble de matrice, qui comprend une matrice en matière électriquement non conductrice dans la zone de paroi latérale et un ou plusieurs poinçon(s) supérieur et/ou inférieur en matière conductrice et auquel des impulsions de courant électrique sont transmises pendant le processus de compactage, caractérisé en ce qu'une pression axiale de compactage qui est ≤ aux pressions habituelles pour le compactage statique de matériaux correspondants est appliquée en premier lieu à l'ensemble de matrice rempli de poudre, en ce qu'une contraction volumique et une densification de poudre discontinues à des valeurs > à 96 % de la densité théorique sont atteintes dans la matière comprimée, en maintenant la sollicitation de pression, au moyen de 1 à 3 impulsions de courant d'une durée de 5 x 10⁻⁵ à 10⁻² sec et d'une charge électrique, rapportée à 1 cm³ de matière comprimée, de > 20 As et sous une tension électrique <30 V entre les poinçons supérieur et inférieur, et en ce que des contractions volumiques déclenchées de manière discontinue dans la matière comprimée sont favorisées au moyen de dispositifs qui amènent le ou les poinçon(s) à poursuivre avec un retard minime dans la direction de levage le mouvement de la matière dû à son compactage.

2. Procédé de compactage de poudres en ébauches selon la revendication 1, caractérisé par l'application d'une pression de compactage de 3 à 7 t/cm².

3. Procédé de compactage de poudres en ébauches selon la revendication 2, caractérisé en ce que des impulsions de courant d'une charge électrique comprise entre 100 et 400 As sont transmises par l'intermédiaire de l'ensemble de matrice.

4. Procédé de compactage de poudres en ébauches selon la revendication 1 ou 3, caractérisé en ce que des impulsions de courant dont l'intensité de courant de pointe, rapportée à une surface de compression de 1 cm², est comprise entre 10 et 200 kA sont appliquées.

5. Procédé de compactage de poudres en ébauches selon l'une quelconque des revendications 1 à 4, caractérisé en ce que des poinçons de compression en matériau non magnétique ou faiblement magnétique à résistance mécanique élevée et à bonne conductivité électrique sont employés .

6. Procédé de compactage de poudres en ébauches selon l'une quelconque des revendications 1 à 5, caractérisé en ce que des poudres métalliques sont compactées.

7. Procédé de compactage de poudres en ébauches selon l'une quelconque des revendications 1 à 6, caractérisé en ce que des poudres métallisées sont compactées.

8. Procédé de compactage de poudres en ébauches selon l'une quelconque des revendications 1 à 7, caractérisé en ce que des mélanges de poudres et de fractions de matériaux électriquement conducteurs sont compactés.

9. Procédé de compactage de poudres en ébauches selon l'une quelconque des revendications 1 à 8, caractérisé en ce que du cuivre, de l'aluminium et/ou du graphite sont ajoutés au mélange de poudres comme matériaux électriquement bons conducteurs.

10. Procédé de compactage de poudres en ébauches selon l'une quelconque des revendications 1 à 9, caractérisé en ce que, après une première impulsion de courant dont la hauteur de courant de pointe est relativement faible et la durée d'impulsion relativement longue, une deuxième impulsion de courant dont la hauteur de courant de pointe est forte et dont la durée d'impulsion brève est appliquée.

11. Dispositif de mise en oeuvre du procédé selon l'une quelconque des revendications 1 à 10, caractérisé en ce que celui-ci comprend une presse mécanique et en ce que la poursuite de la matière, avec un retard minime, par le poinçon de compactage dans la direction de levage est effectuée au moyen d'un bloc de matière plastique qui est sollicité préalablement par la pression de compactage et qui est agencé entre poinçon de compactage et entraînement mécanique de la presse.
